(19) Europäisches Patentamt
European Patent Office
Office européen des brevets

(11) **EP 1 197 071 B1**

(12) **EUROPEAN PATENT SPECIFICATION**

(45) Date of publication and mention
of the grant of the patent:
**19.12.2007 Bulletin 2007/51**

(51) Int Cl.:
*H04N 5/44* *(2006.01)*      *H04N 5/21* *(2006.01)*

(21) Application number: **00950334.3**

(22) Date of filing: **13.07.2000**

(86) International application number:
**PCT/US2000/019103**

(87) International publication number:
**WO 2001/006768 (25.01.2001 Gazette 2001/04)**

(54) **TELEVISION RECEIVER FOR DIGITAL SIGNALS WITH OFFSET TUNING PROVISIONS**

FERNSEHEMPFÄNGER FÜR DIGITALE SIGNALE MIT
FREQUENZVERSTIMMUNGSMASSNAHMEN

RECEPTEUR DE TELEVISION POUR SIGNAUX NUMERIQUES AVEC DISPOSITIONS D'ACCORD
DE DECALAGE

(84) Designated Contracting States:
**DE FR GB IT**

(30) Priority: **16.07.1999 US 144415 P**

(43) Date of publication of application:
**17.04.2002 Bulletin 2002/16**

(60) Divisional application:
**07100584.7**

(73) Proprietor: **Thomson Licensing**
**92100 Boulogne-Billancourt (FR)**

(72) Inventor: **MAYER, Matthew, Thomas**
**Indianapolis, IN 46250 (US)**

(74) Representative: **Lindemann, Robert et al**
**Thomson Holding Germany GmbH & Co. OHG**
**European Patent Operations**
**Karl-Wiechert-Allee 74**
**30625 Hannover (DE)**

(56) References cited:
**EP-A- 0 903 937          WO-A-99/05796**
**DE-A- 3 616 987          US-A- 5 805 241**
**US-A- 5 940 143**

**Description**

FIELD OF THE INVENTION

The invention generally relates to a digital television receiver. More particularly, the invention relates to an apparatus for selectively offsetting the frequency of a desired signal to obtain greater attenuation of undesired signals.

BACKGROUND OF THE DISCLOSURE

A Digital Television Standard published by the Advanced Television Subcommittee (ATSC) specifies vestigial sideband (VSB) signals for transmitting digital television (DTV) signals, such as high definition television (HDTV) signals. The VSB signals are transmitted in 6-MHz bandwidth television channels such as those currently used in conventional terrestrial broadcasting of National Television Subcommittee (NTSC) analog television signals within the United States. The HDTV system is incompatible with the NTSC broadcast standard, thus, if the broadcasting industry immediately adopted the digital HDTV system and abandoned the NTSC system, NTSC television receivers purchased within the last few years would be rendered obsolete. To avoid this undesirable result, the transition from conventional analog NTSC-standard broadcasts to digital HDTV television broadcasts will occur over a period that may last fifteen years to allow for normal attrition of older NTSC television receivers. Thus, during this transition period, both NTSC analog and HDTV digital signals will occupy the television spectrum. Television receivers manufactured during the transition period will be capable of processing both NTSC and HDTV signals.

At a particular geographic location, a receiver may receive signals from two transmitters that have adjacent channel spectrum allocations (e.g., an HDTV channel adjacent to an NTSC channel). When attempting to receive one of the signals (the desired signal), the other (the undesired, adjacent channel signal) creates interference in the system. Consequently, the signals must be filtered to reduce the interference from the adjacent channel signal. This situation is particularly problematic when the desired signal is an HDTV signal and the undesired signal is a lower adjacent NTSC signal because of the proximity of the aural carrier of the NTSC signal to the digital signal. The desired to undesired (D/U) signal ratio can be more than -40 dB. This presents an extreme challenge to fabricate surface acoustic wave (SAW) filters, such as those required by digital television receivers, that have a steep transition band roll off in order to remove the undesired signal without significantly attenuating the desired signal.

EP 0903937A2 discloses a television signal receiver, in which undesired analog signals in channels adjacent to channels carrying digital signals are attenuated by a series-connection of two SAW filters and amplifiers for signal regeneration.

Thus, there exists a need in the art for digital television receivers using conventional SAW filters that are able to reduce adjacent channel interference, particularly, lower adjacent NTSC channel interference.

SUMMARY OF THE INVENTION

The invention overcomes the disadvantages associated with the prior art by providing a television receiver for reducing adjacent channel interference when receiving digital signals. Specifically, the invention tunes to a digital signal associated with a selected broadcast channel and downconverts the digital signal to an intermediate frequency (IF) signal. The center frequency of the IF signal is determined by a microprocessor, which searches a memory unit for information associated with a selected broadcast channel and determines the presence or absence of a lower adjacent NTSC analog channel. In the case a lower adjacent NTSC analog channel is present, the microprocessor causes the IF signal to be shifted by 62.5 kHz. The IF signal is thus pushed further towards the band edge of the surface acoustic wave filter present in the digital signal processor, resulting in further attenuation of the lower adjacent NTSC signal, particularly the aural carrier of the NTSC signal.

In an alternative embodiment of the invention, the microprocessor determines the input signal power of the tuned digital signal using data obtained from an automatic gain control (AGC) circuit. If the microprocessor determines the input signal power is larger than that of the adjacent channel, the microprocessor does not cause the frequency of the IF signal to be shifted from nominal.

BRIEF DESCRIPTION OF THE DRAWINGS

The teachings of the present invention can be readily understood by considering the following detailed description in conjunction with the accompanying drawings, in which:

  FIG. 1 depicts a block diagram of a television receiver in accordance with the present invention;
  FIG. 2A illustrates an IF spectrum and SAW filter response before frequency shift;
  FIG. 2B illustrates an IF spectrum and SAW filter response after frequency shift; and
  FIG. 3 illustrates the desired to undesired signal ratio for both nominal frequency and shifted frequency television signals.

To facilitate understanding, identical reference numerals have been used, where possible, to designate identical elements that are common to the figures.

DETAILED DESCRIPTION

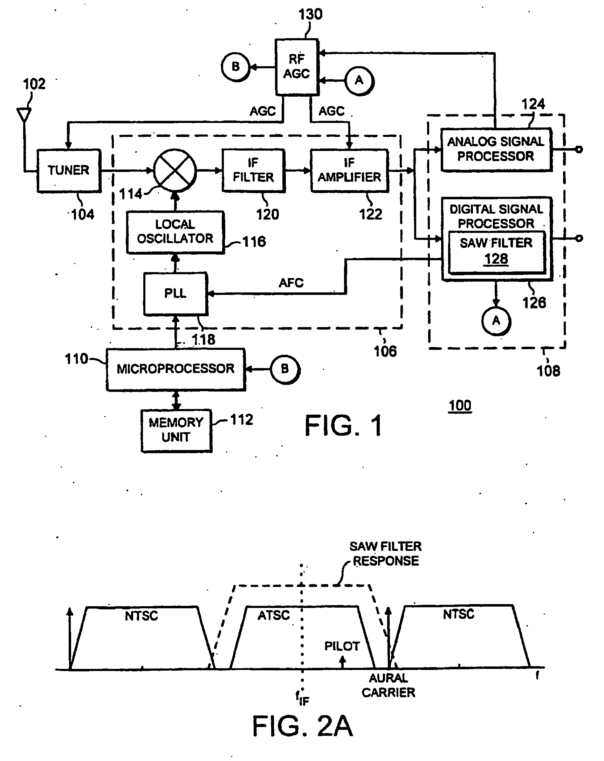

FIG. 1 depicts a block diagram of a television receiver 100 in accordance with the present invention. The receiver 100 comprises a tuner 104 coupled to an RF source 102, a frequency conversion stage 106, a demodulation stage 108, a microprocessor 110 coupled to a memory unit 112, and an automatic gain control (AGC) circuit 130. The tuner 104 selects the radio frequency (RF) signal corresponding to a broadcast channel selected from a plurality of channel locations in a frequency band provided by the RF source 102. The RF signals associated with broadcast channels are analog and digital television signals. The analog television signal may comprise a conventional National Television Standard Committee (NTSC) modulated signal within the United States. The digital television signal may comprise a Vestigial Sideband (VSB) modulated signal in compliance with the Advanced Television Systems Committee (ATSC) standard A/53, for example, a high definition television (HDTV) signal.

The frequency conversion stage 106 comprises a mixer 114, a local oscillator (LO) 116, a phase-locked loop (PLL) 118, an IF filter 120, and an IF amplifier 122. The mixer 114 is coupled to the tuner 104 and receives the RF signal. The LO 116 is also coupled to the mixer 114. The LO 116 generates a LO signal having either a nominal frequency corresponding to the selected broadcast channel or a frequency shifted upward from nominal by 62.5 kHz. The PLL 118 controls the frequency of the LO signal using feedback from the demodulation stage 108 and signals from the microprocessor 110. The PLL 118 causes the LO 116 to generate a nominal frequency when the microprocessor 110 determines the absence of a lower adjacent analog broadcast channel. The PLL 118 causes the LO 116 to generate a frequency shifted upward from nominal by 62.5 kHz when the microprocessor 110 determines the presence of a lower adjacent analog broadcast channel.

The mixer 114 heterodynes the selected RF signal and the LO signal to produce a downconverted IF signal. The mixer 114 produces the sum and difference frequency products of the LO signal and the selected RF signal. The IF signal is coupled to the IF filter 120 that has a passband response selected to pass the difference frequency product of the LO signal and the selected RF signal. As shown in FIG. 2A, the spectrum of the filtered IF signal is a mirror image of the signal spectrum before downconversion. The IF amplifier is coupled to the IF filter and amplifies the IF signal for output to the demodulation stage 108.

When downconverting the selected RF signal, the frequency of the LO signal is determined using the following equation:

$$f_{LO} = f_c + f_{IF}$$

where $f_c$ is the center frequency of the selected RF signal. When the microprocessor 110 determines the presence of a lower adjacent analog broadcast channel, $f_{LO}$ is shifted upward from the nominal level by one 62.5 kHz (the resolution of the PLL 118). Thus, because the filtered IF signal is mirrored, the center frequency of the filtered IF signal, $f_{IF}$, is also shifted upward by 62.5 kHz. In the United States, $f_{IF}$ of the video carrier is nominally 45.75 MHz for analog television signals and 44 MHz for digital television signals.

The demodulation stage 108 comprises an analog signal processor 124 and a digital signal processor 126 having a surface acoustic wave (SAW) filter 128. The analog signal processor 124 is coupled to the IF amplifier 122 and demodulates and processes the IF signal for output. The SAW filter 128 of the digital signal processor 126 is coupled to the IF amplifier 122. The SAW filter 128 has a center frequency $f_{IF}$ and has a passband designed to pass the inband digital signal and attenuate adjacent signals associated with both the upper and lower broadcast channels. The digital signal processor 126 is coupled to the SAW filter 128 and demodulates and processes the filtered IF signal for output.

The microprocessor 110 executes software stored in the memory unit 112 to determine if a lower analog signal adjacent the digital signal associated with the selected broadcast channel is present. Specifically, the microprocessor 110 searches the memory unit 112 for information regarding the selected broadcast channel. If the selected broadcast channel is a digital channel, the microprocessor 110 determines the presence or absence of a lower adjacent analog channel. When a lower adjacent analog channel is absent, the microprocessor causes the frequency of the LO signal to be nominal. When a lower adjacent analog channel is present, the microprocessor 110 causes the frequency of the LO signal to be shifted from nominal by 62.5 kHz.

In an alternative embodiment of the invention, the microprocessor 110 receives signals from the AGC circuit 130 regarding the signal power of the selected RF signal. When the signal power is comparable to that of the lower adjacent analog signal, the microprocessor 110 performs the frequency shifting operation. When the signal power is larger than that of the lower adjacent analog signal, the microprocessor 110 does not perform the frequency shifting operation.

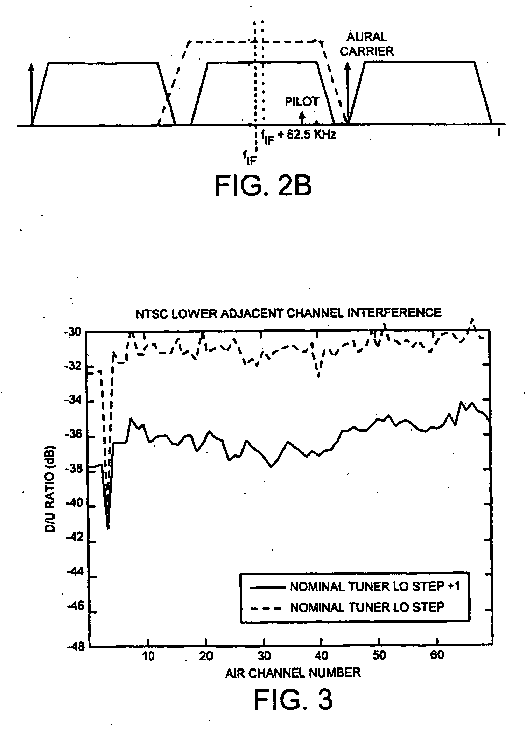

FIG. 2 illustrates the operation of the present invention when the selected broadcast channel is associated with an HDTV signal and both upper and lower adjacent broadcast channels are associated with NTSC signals. FIG. 2A shows the spectrum of the downconverted HDTV signal with both upper and lower adjacent NTSC channels before the frequency shifting operation of the present invention. Because downconversion flips the spectrum of the IF signal, the lower adjacent NTSC signal has a higher center frequency than that of the selected HDTV signal. The dashed line indicates the frequency response of the SAW filter 128 of the digital signal processor 126. As shown, the aural carrier of the lower adjacent NTSC signal is within the passband of the SAW filter, which can cause interference in the demodulation and processing performed by the digital signal processor 126.

FIG. 2B shows the spectrum of the downconverted HDTV signal with both the upper and lower adjacent channels after the frequency shifting operation of the present invention. As shown, $f_{IF}$ is shifted upward from nominal by 62.5 kHz thereby shifting the spectrum of the desired inband HDTV signal towards the upper band of the SAW filter 128. As a result, the aural carrier of the lower adjacent NTSC signal is shifted out of the passband of the SAW filter. FIG. 3 shows the effects of the present invention when receiving an HDTV signal in the presence of a lower adjacent NTSC signal for a plurality of broadcast channels.

Although various embodiments which incorporate the teachings of the present invention have been shown and described in detail herein, those skilled in the art may readily devise many other varied embodiments that still incorporate these teachings.

**Claims**

1. A television receiver (100) for receiving a digital television signal susceptible to an interference caused by an analog television signal in a lower adjacent channel, said television receiver comprising:

   - a tuner (104) for receiving the digital signal associated with a broadcast channel selected from a plurality of channel locations in a frequency band;
   - a frequency conversion stage (108), coupled to said tuner, for converting in frequency the digital signal to an intermediate frequency (IF) signal to be output;
   - a filter (128), coupled to said frequency conversion stage, for attenuating adjacent signals, said filter having a center frequency equal to a nominal frequency;

   **characterised in that**

   - means (110, 130) for determining the absence or presence of the interference are provided, and that
   - the center frequency of said IF signal can be switched to said nominal frequency or to a second frequency being shifted from said nominal frequency, wherein the second frequency is located closer to the upper band edge of the filter (128), and wherein the second frequency is chosen such that the lower channel adjacent analogue signal is further attenuated by the characteristic of said filter, when the presence of the interference is determined and the center frequency of said IF signal is accordingly shifted to said second frequency.

2. The television receiver of claim 1 further comprising:

   - a memory unit (112) for storing software and information associated with each of the plurality of broadcast channels; and
   - a microprocessor (110) coupled to said memory unit and said frequency conversion stage for executing software stored in said memory unit, searching said memory unit for a lower channel analogue signal adjacent to the selected digital signal, and causing the center frequency of said IF signal to be switched to either said nominal frequency or said second frequency;
   - where said microprocessor, in response to the absence of a lower analogue signal adjacent to the digital signal, causes the center frequency of said IF signal to be switched to said nominal frequency:
   - where said microprocessor, in response to the presence of a lower analogue signal adjacent to the digital signal, causes the center frequency of said IF signal to be switched to said second frequency.

3. The television receiver of claim 1 further comprising

   - an automatic gain control (AGC) circuit (130) indicative of the power of the tuned digital television signal,
   - wherein the determining means determines the absence or presence of the interference based on a comparison of said power with the power of the lower adjacent analogue signal,

4. The television receiver of claim 1 wherein said frequency conversion stage comprises:

   - a local oscillator (116) for generating a local oscillation signal;
   - a phase-locked loop (118) coupled to said local oscillator for controlling the frequency of said local oscillation signal;
   - a mixer (114) coupled to said local oscillator for heterodyning the digital signal with said local oscillation signal to generate said IF signal; and
   - an IF filter (120) coupled to said mixer, for passing the lower band of said IF signal.

5. The television receiver of any one of the preceding claims **characterised in that** said second frequency is said nominal frequency shifted upward by 62.5 kHz,

6. A method of receiving a digital television signal susceptible to an interference caused by a lower channel adjacent analogue television signal comprising the steps of:

- tuning a radio frequency (RF) channel carrying a digital signal and having a lower adjacent analogue signal;
- determining the absence or presence of said interference;
- heterodyning said RF signal with said LO signal to generate a modified intermediate frequency (IF) signal having a second frequency shifted from nominal being located closer to the upper band edge of a filter (128) to which the modified IF signal is applied;
- filtering said modified IF signal by said filter, wherein said lower adjacent analogue signal is further attenuated by the characteristic of said filter, when the center frequency of said IF signal is shifted to said second frequency upon determination of the presence of said interference.

7. The method of claim 8 wherein the second frequency is shifted upward from nominal by 62,5 kHz.

## Patentansprüche

1. Fernsehempfänger (100) zum Empfangen eines digitalen Fernsehsignals, das für eine durch ein analoges Fernsehsignal in einem unteren benachbarten Kanal verursachte Störung anfällig ist, wobei der Fernsehempfänger umfasst:

einen Kanalwähler (104) zum Empfangen des digitalen Signals, das zu einem Rundfunkkanal gehört, der aus einer Vielzahl von Kanalpositionen in einem Frequenzband ausgewählt wird; eine mit dem Kanalwähler gekoppelte Frequenzwandlungsstufe (106), um das digitale Signal in der Frequenz zu einem Zwischenfrequenzsignal (IF) umzuwandeln, das ausgegeben werden soll; und ein mit der Frequenzwandlungsstufe gekoppeltes Filter (128) zum Dämpfen von benachbarten Signalen, wobei das Filter eine Mittenfrequenz aufweist, welche einer Nennfrequenz entspricht;

**dadurch gekennzeichnet, dass**
Mittel (110, 130) zum Ermitteln der Abwesenheit oder Anwesenheit der Störung bereitgestellt sind, und dass die Mittenfrequenz des IF-Signals zu der Nennfrequenz oder zu einer zweiten Frequenz geschaltet werden kann, die von der Nennfrequenz verschoben ist, wobei die zweite Frequenz näher an der oberen Bandgrenze des Filters (128) liegt, und wobei die zweite Frequenz dergestalt gewählt ist, dass das analoge Signal des unteren benachbarten Kanals stärker durch die Kennlinie des Filters gedämpft wird, wenn die Anwesenheit der Störung festgestellt wird, und die Mittenfrequenz des IF-Signals dementsprechend zu der zweiten Frequenz verschoben wird.

2. Fernsehempfänger nach Anspruch 1, ferner umfassend:

eine Speichereinheit (112) zum Speichern von Software und Informationen, die zu jedem von der Vielzahl von Rundfunkkanälen gehören; und einen Mikroprozessor (110), der mit der Speichereinheit und der Frequenzwandlungsstufe gekoppelt ist, zum Ausführen von Software, die in der Speichereinheit gespeichert ist, zum Durchsuchen der Speichereinheit nach einem unteren analogen Signal neben dem digitalen Signal, und zum Verursachen, dass die Mittenfrequenz des IF-Signals entweder zu der Nennfrequenz oder zu der zweiten Frequenz geschaltet wird;

wobei der Mikroprozessor als Antwort auf die Abwesenheit eines unteren analogen Signals neben dem digitalen Signal verursacht, dass die Mittenfrequenz des IF-Signals zu der Nennfrequenz geschaltet wird; wobei der Mikroprozessor, als Reaktion auf die Anwesenheit eines unteren analogen Signals neben dem digitalen Signal, verursacht, dass die Mittenfrequenz des IF-Signals zu der zweiten Frequenz geschaltet wird.

3. Fernsehempfänger nach Anspruch 1, ferner umfassend:

eine automatische Verstärkungsregelschaltung (AGC) (130), welche die Leistung des abgestimmten digitalen Fernsehsignals anzeigt,

wobei die Mittel zum Ermitteln die Abwesenheit oder Anwesenheit der Störung aufgrund eines Vergleichs der Leistung mit der Leistung des unteren benachbarten analogen Signals ermitteln.

4. Fernsehempfänger nach Anspruch 1, wobei die Frequenzwandlungsstufe umfasst:

einen lokalen Oszillator (116) zum Erzeugen eines lokalen Schwingungssignals; eine phasenverriegelte Schleife (118), die mit dem lokalen Oszillator gekoppelt ist, zum Steuern der Frequenz des lokalen Schwingungssignals; einen Mischer (114), der mit dem lokalen Oszillator gekoppelt ist, zum Überlagern des digitalen Signals mit dem lokalen Schwingungssignal, um das IF-Signal zu erzeugen; und

ein IF-Filter (120), das mit dem Mischer gekoppelt ist, zum Durchlassen des unteren Bandes des IF-Signals.

5. Fernsehempfänger nach Anspruch 1, wobei die zweite Frequenz aus der um 62,5 kHz aufwärts verschobenen Nennfrequenz besteht.

6. Verfahren zum Empfangen eines digitalen Fernsehsignals, das für eine Störung anfällig ist, die durch ein analoges Fernsehsignal eines unteren benachbarten Kanals verursacht wird, die folgenden Schritte umfassend:

   Abstimmen eines Funkfrequenzkanals (RF), der ein digitales Signal trägt und ein unteres benachbartes analoges Signal aufweist;
   Ermitteln der Abwesenheit oder Anwesenheit der Störung;
   überlagern des RF-Signals mit dem LO-Signal, um ein modifiziertes Zwischenfrequenzsignal (IF) zu erzeugen, das eine zweite Frequenz aufweist, die von dem Nennwert verschoben ist, der näher an der oberen Bandgrenze eines Filters (128) liegt, an welches das modifizierte IF-Signal angelegt wird;
   Filtern des modifizierten IF-Signals durch das Filter, wobei das untere benachbarte analoge Signal stärker durch die Kennlinie des Filters gedämpft wird, wenn die Mittenfrequenz des IF-Signals zu der zweiten Frequenz nach Ermitteln der Anwesenheit der Störung verschoben wird.

7. Verfahren nach Anspruch 6, wobei die zweite Frequenz von dem Nennwert um 62,5 kHz aufwärts verschoben wird.

## Revendications

1. Récepteur de télévision (100) permettant de recevoir un signal de télévision numérique sensible à des interférences provoquées par un signal de télévision analogique dans un canal adjacent inférieur, ledit récepteur de télévision comprenant :

   un syntoniseur (104) pour recevoir le signal numérique associé à un canal de diffusion sélectionné parmi une pluralité d'emplacements de canal dans une bande de fréquence ;
   une étape (106) de conversion de fréquence, couplée audit syntoniseur, pour convertir en fréquence le signal numérique en un signal de fréquence intermédiaire (IF) pour une émission ;
   un filtre (128), couplé à ladite étape de conversion de fréquence, pour atténuer des signaux adjacents, ledit filtre ayant une fréquence centrale égale à une fréquence nominale ;

**caractérisé en ce que**
des moyens (110, 130) permettant de déterminer l'absence ou la présence des interférences sont fournis, et **en ce que**
la fréquence centrale dudit signal IF peut être commutée vers ladite fréquence nominale ou vers une deuxième fréquence décalée de ladite fréquence nominale, où la deuxième fréquence est située plus près de l'extrémité supérieure de la bande du filtre (128), et où la deuxième fréquence est choisie de sorte que le signal analogique adjacent de canal inférieur est en outre atténué par la caractéristique dudit filtre, lorsque la présence des interférences est déterminée et que la fréquence centrale dudit signal IF est en conséquence décalée vers ladite deuxième fréquence.

2. Récepteur de télévision selon la revendication 1 comprenant en outre :

   une unité (112) de mémoire permettant de stocker un logiciel et des informations associées à chaque canal de la pluralité de canaux de diffusion ; et
   un microprocesseur (110) couplé à ladite unité de mémoire et à ladite étape de conversion de fréquence permettant d'exécuter le logiciel stocké dans ladite unité de mémoire, de rechercher dans ladite unité de mémoire un signal analogique inférieur adjacent au signal numérique, et provoquant une commutation de la fréquence centrale dudit signal IF soit à ladite fréquence nominale, soit à ladite deuxième fréquence ;

   où ledit microprocesseur, en réponse à l'absence d'un signal analogique inférieur adjacent au signal numérique, provoque une commutation de la fréquence centrale dudit signal IF à ladite fréquence nominale ;
   où ledit microprocesseur, en réponse à la présence d'un signal analogique inférieur adjacent au signal numérique, provoque une commutation de la fréquence centrale dudit signal IF à ladite deuxième fréquence.

3. Récepteur de télévision selon la revendication 1 comprenant en outre
   un circuit (130) de commande automatique de gain (AGC) indiquant la puissance du signal de télévision numérique syntonisé,
   où le moyen de détermination détermine l'absence ou la présence des interférences sur la base d'une comparaison de ladite puissance avec la puissance du signal analogique adjacent inférieur.

4. Récepteur de télévision selon la revendication 1 où ladite étape de conversion de fréquence comprend :

un oscillateur local (116) permettant de générer un signal d'oscillation local ;

une boucle à verrouillage de phase (118) couplée audit oscillateur local permettant de commander la fréquence dudit signal d'oscillation local ;

un mélangeur (114) couplé audit oscillateur local pour transposer le signal numérique avec ledit signal d'oscillation local afin de générer ledit signal IF ; et

un filtre IF (120) couplé audit mélangeur, pour passer la bande inférieure dudit signal IF.

5. Récepteur de télévision selon la revendication 1 où ladite deuxième fréquence est ladite fréquence nominale décalée vers le haut de 62,5 kHz.

6. Procédé de réception d'un signal de télévision numérique sensible à des interférences provoquées par un signal de télévision analogique adjacent de canal inférieur comprenant les étapes consistant à :

syntoniser un canal de fréquence radio (RF) portant un signal numérique et possédant un signal analogique adjacent inférieur ;

déterminer l'absence ou la présence desdites interférences ;

transposer ledit signal RF avec ledit signal LO afin de générer un signal de fréquence intermédiaire (IF) modifié possédant une deuxième fréquence décalée par rapport à une fréquence nominale située plus près de l'extrémité de la bande supérieure d'un filtre (128) auquel le signal IF modifié est appliqué,

filtrer ledit signal IF modifié par ledit filtre, où ledit signal analogique adjacent inférieur est en outre atténué par la caractéristique dudit filtre, lorsque la fréquence centrale dudit signal IF est décalée vers ladite deuxième fréquence suite à une détermination de la présence desdites interférences.

7. Procédé selon la revendication 6 où la deuxième fréquence est décalée de 62,5 kHz vers le haut par rapport à une fréquence nominale.

FIG. 1

100

FIG. 2A

AURAL
CARRIER

PILOT

$f_{IF}$ + 62.5 KHz

$f_{IF}$

## FIG. 2B

NTSC LOWER ADJACENT CHANNEL INTERFERENCE

NOMINAL TUNER LO STEP +1

--- NOMINAL TUNER LO STEP

AIR CHANNEL NUMBER

## FIG. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0903937 A2